# EUROPÄISCHE PATENTSCHRIFT

(11) **EP 0 996 850 B1**
(45) Veröffentlichungstag und Bekanntmachung des Hinweises auf die Patenterteilung: **23.01.2008**
(21) Anmeldenummer: 99952116.4
(22) Anmeldetag: 10.05.1999
(51) Int. Cl.: G01F 1/32, G01F 25/00, G01B 11/12, G01B 11/02

(54) **VERFAHREN ZUM TROCKENKALIBRIEREN VON WIRBEL-DURCHFLUSSAUFNEHMERN**
METHOD FOR DRY-CALIBRATING VORTEX FLOW SENSORS
PROCEDE D'ETALONNAGE A SEC DE CAPTEURS DE DEBIT A TOURBILLONS

(30) Priorität: 14.05.1998 EP 98108753; 30.06.1998 US 91280 P
(43) Veröffentlichungstag der Anmeldung: 03.05.2000
(73) Patentinhaber: Endress + Hauser Flowtec AG, 4153 Reinach BL 1 (CH)
(72) Erfinder: OHLE, Frank, D-79585 Steinen (DE); BERNET, Walter, D-79585 Steinen (DE); MAUL, Joachim, D-79576 Weil am Rhein (DE)
(74) Vertreter: Andres, Angelika Maria
(86) Internationale Anmeldenummer: PCT/EP1999/003163
(87) Internationale Veröffentlichungsnummer: WO 1999/060342

(56) Entgegenhaltungen:
- EP-A- 0 841 545
- DE-A- 19 506 167

## Beschreibung

Die Erfindung betrifft ein Verfahren zum Trockenkalibrieren von Wirbel-Durchflußaufnehmern, die im folgenden kurz als Wirbelaufnehmer bezeichnet sind.

Die Funktionsweise üblicher Wirbelaufnehmer beruht bekanntlich auf der Ausnutzung von periodischen Druckschwankungen in einer Kármán'schen Wirbelstraße. Diese entsteht, wenn ein Fluid in einem Meßrohr gegen ein Hindernis, insb. einen Staukörper, strömt. Von diesem lösen sich auf seiner stromabwärtigen Seite Wirbel ab, die die erwähnte Wirbelstraße bilden. Die Frequenz der Ablösung der Wirbel ist proportional zum Volumendurchfluß des Fluids.

Ein üblicher Wirbelaufnehmer umfaßt u.a. den erwähnten Staukörper und ein Meßrohr vorgegebener Länge, in dem im Betrieb das zu messende Fluid strömt. Das Meßrohr hat eine Achse, eine Innenfläche, ein Einlaufende, ein Auslaufende, eine zu einer von einem Kunden bestellten Nennweite gehörende lichte Weite und eine zu einem zulässigen Druck passende Stärke seiner Wand.

Der Staukörper hat eine Horizontalquerschnittsfläche mit einer vom Hersteller wählbaren geometrischen Form. Der Staukörper hat ferner ein entlang einer ersten Fixierungszone mit der Wand des Meßrohrs verbundenes erstes Ende und ein entlang einer zweiten Fixierungszone mit der Wand des Meßrohrs verbundenes zweites Ende. Der Staukörper hat auch eine Anströmfläche mit einer ersten und einer zweiten Abreißkante und ist üblicherweise entlang eines Durchmessers des Meßrohrs angeordnet. Der Staukörper kann auch noch weitere Abreißkanten, insb. eine dritte und eine vierte Abreißkante aufweisen.

Schließlich sitzt ein Sensorelement im Staukörper oder ist stromabwärts des Staukörpers von innen an der Wand des Meßrohrs oder von außen an der Wand oder innerhalb der Wand angeordnet. Die vom Sensorelement erzeugten elektrischen Signale werden von einer Auswerte-Elektronik verarbeitet und in üblicher Weise angezeigt und/oder an weitere Elektroniken weitergeleitet.

Charakteristisch für die Staukörper ist, daß sie auf ihrer stromaufwärtigen Seite die erwähnte Anströmfläche haben, gegen die das Fluid anströmt und an der es "gestaut" wird. Ferner verjüngen sich die Staukörper üblicherweise auf der stromabwärtigen Seite, um mindestens die erste und zweite Abreißkante für das Ablösen der Wirbel zu erhalten und um dieses zu begünstigen.

Die mit den Wirbeln verbundenen Druckschwankungen werden mittels des im Staukörper selbst oder mittels eines stromabwärts von ihm angeordneten Sensorelements, das z.B. kapazitiv, induktiv oder piezoelektrisch wirken, aber auch ein Ultraschallsensor sein kann, festgestellt und in elektrisch verarbeitbare Signale umgewandelt. Diese Signale haben eine Frequenz, die direkt proportional zum Volumendurchfluß im Meßrohr ist.

Allerdings muß aufgrund von Schwankungen der geometrischen Abmessungen von gefertigten Wirbelaufnehmern jeder dieser Wirbelaufnehmer einzeln kalibriert werden, d.h. jedes Exemplar wird in einer Kalibrieranlage mit einem Standardfluid, meistens mit Wasser, ausgemessen. Für diese Kalibrier-Messung hat sich die Bezeichnung Naß-Kalibrierung eingebürgert.

Dies geschieht üblicherweise so, daß mittels der Kalibrieranlage mehrere genau bekannte Durchflußwerte vorgegeben und eingestellt werden und daß für diese "Kalibrierwerte" die vom jeweiligen Wirbelaufnehmer mittels der zugehörigen Auswerte-Elektronik angezeigten Werte erfaßt werden. Aus der Abweichung der erfaßten von den genauen Werten ergibt sich ein für jeden einzelnen Wirbelaufnehmer individueller und ihn charakterisierender Kalibrierfaktor.

Der Kalibrierfaktor wird u.a. dazu benutzt, z.B. in der Auswerte-Elektronik des einzelenen Exemplars eine Verstärkerstufe, deren Verstärkungsfaktor einstellbar ist, so abzugleichen, daß die angezeigten Durchflußwerte aller produzierten Wirbelaufnehmer einander gleich und gleich den oben definierten Kalibrierwerten sind.

Die beschriebene Naß-Kalibrierung ist umständlich, zeitraubend und aufwendig. In der Literatur, vgl. "Bulletin of NRLM", Band 45, 1996, Seiten 174 bis 179, wurde schon der Gedanke dargelegt, die produzierten Wirbelaufnehmer aufgrund von festgestellten mechanischen Abmessungen und aufgrund einer experimentell optimierten Geometrie der einzelnen Staukörper trocken zu kalibrieren. Diese Optimierung besteht darin, diejenige Staukörpergeometrie zu ermitteln, bei der die Abhängigkeit der Strouhal-Zahl von der Reynolds-Zahl möglichst linear ist.

Dieses Verfahren zur Trockenkalibrierung ist jedoch noch nicht genau genug, da Fertigungstoleranzen der Staukörper und anderer Teile der Wirbelaufnahmer unberücksichtigt bleiben. Ferner läßt es dieses Verfahren nicht zu, daß aus anderen Gründen erforderliche Formen von Staukörpern benutzt werden können. Im übrigen lassen sich heutige Genauigkeitsforderungen, die in der Größenordnung von 0,75% vom Meßwert liegen, mit dem vorbeschrieben Verfahren nicht erreichen.

Es ist daher eine Ziel der Erfindung, ein Verfahren zum Trockenkalibrieren anzugeben, das wesentlich genauer als das vorbeschriebene Verfahren ist.

Die Erfindung besteht zur Erreichung dieses Zieles in einem Verfahren zum Trockenkalibrieren von Wirbelaufnehmern, von denen jeder aufweist:
- ein Meßrohr mit einer vorgegebenen Länge und einem Lumen,
   -- in dem im Betrieb ein bezüglich seines Volumendurchflusses zu messendes Fluid strömt und
   -- das eine Achse,
   -- eine Innenfläche,
   -- ein Einlaufende, das mit dem Lumen eine Umrißlinie bildet,
   -- ein Auslaufende,
   -- eine zu einer Nennweite gehörende lichte Weite und
   -- eine zu einem zulässigen Druck des Fluids passende Stärke seiner Wand hat,
- einen Staukörper,
   - der eine Querschnittsfläche mit einer vom Hersteller wählbaren geometrischen Form hat,
   - der ein entlang einer ersten Fixierungszone mit der Wand des Meßrohrs verbundenes erstes Ende und
   - ein entlang einer zweiten Fixierungszone mit der Wand des Meßrohrs verbundenes zweites Ende aufweist,
   - der eine Anströmfläche mit einer ersten und einer zweiten Abreißkante hat und
   - der entlang eines Durchmessers des Meßrohrs angeordnet ist, und
- ein Sensorelement,
   - das im Staukörper sitzt oder
   - das stromabwärts des Staukörpers von innen an der Wand oder von außen an der Wand oder innerhalb der Wand des Meßrohrs angeordnet ist,
bei welchem Verfahren
- mittels einer auf der Achse vor dem Meßrohr angeordneten hochauflösenden elektronischen Kamera in Strömungsrichtung ein digitalisiertes, zweidimensionales Gesamtbild vom Staukörper, von der im Bereich des Staukörpers vorhandenen Innenfläche des Meßrohrs, von den beiden Fixierungszonen und von der Umrißlinie des Einlaufendes erzeugt wird,
- das Gesamtbild in ein erstes, ein zweites und ein drittes Teilbild aufgeteilt wird,
   - welches erste Teilbild praktisch nur Information über das Einlaufende und die Innenfläche enthält,
   - welches zweite Teilbild praktisch nur Information über den Staukörper ohne die Fixierungszonen enthält und
   - welches dritte Teilbild praktisch nur Information über die Fixierungszonen enthält,
- aus dem ersten Teilbild
   - eine Umrißinformation über die Umrißlinie und
   - eine erste Flächenfehlstelleninformation - bezüglich der Innenfläche des Meßrohrs - extrahiert wird,
- aus dem zweiten Teilbild
   - eine erste Kanteninformation über die erste Abreißkante des Staukörpers,
   - eine zweite Kanteninformation über dessen zweite Abreißkante und
   - eine zweite Flächenfehlstelleninformation - bezüglich der Anströmfläche des Staukörpers - extrahiert wird,
- aus dem dritten Teilbild
   - eine erste Verlaufsinformation über die erste Fixierungszone des Staukörpers,
   - eine zweite Verlaufsinformation über dessen zweite Fixierungszone,
   - eine dritte Flächenfehlstelleninformation - bezüglich der Fläche der ersten Fixierungszone - und
   - eine vierte Flächenfehlstelleninformation - bezüglich der Fläche der zweiten Fixierungszone - extrahiert werden,
- aus der ersten und der zweiten Kanteninformation
   - eine Abstandsinformation und
   - eine Winkelinformation bezüglich der Abweichung von der Parallelität der Abreißkanten des Staukörpers gebildet wird,
- aus der Abstandsinformation
   - eine erste Rauhigkeitsinformation bezüglich des nicht exakt geraden Verlaufs der ersten Abreißkante,
   - eine zweite Rauhigkeitsinformation bezüglich des nicht exakt geraden Verlaufs der zweiten Abreißkante,
   - eine Mittelwertinformation aller gegenseitigen Abstände der Abreißkanten entlang des Staukörpers,
   - eine Wichtungsinformation mittels einer für den Betrieb vorgegebene Strömungsprofile des Fluids charakterisierenden Wichtungsfunktion gebildet werden,
- aus der ersten Verlaufsinformation und aus einer den idealen Verlauf der ersten Fixierungszone charakterizierenden ersten Idealinformation eine erste Kreuzkorrellationsinformation und
- aus der zweiten Verlaufsinformation und aus einer den idealen Verlauf der zweiten Fixierungszone charakterizierenden zweiten Idealinformation eine zweite Kreuzkorrellationsinformation gebildet werden und
- in einem neuronalen Netzwerk
   - die Umrißinformation,
   - die erste und die zweite Rauhigkeitsinformation,
   - die Mittelwertinformation,
   - die Wichtungsinformation,
   - die Winkelinformation,
   - die erste, die zweite, die dritte und die vierte Flächenfehlstelleninformation sowie
   - die erste und die zweite Kreuzkorrelationsinformation
- mit jeweils diesen einzelnen Informationen entsprechenden Standardinformationen, die aus einer Vielzahl von Naßkalibrierungen gewonnen worden sind, zu
   - einer Kalibrierfaktorinformation und/oder zu
   - einer Abmessungsinformation über die geometrischen Abmessungen des kalibrierten Wirbelaufnehmers verarbeitet werden.

Nach einer ersten bevorzugten Weiterbildung der Erfindung werden
- aus der Abstandsinformation eine Standardabweichungsinformation bezüglich aller Abstände zwischen den Abreißkanten des Staukörpers gebildet,
- mittels eines Mehrfach-Komparators
   - aus der Umrißinformation und einem dafür vorzugebenden Umrißgrenzwert eine Umriß-Vergleichsinformation,
   - aus der ersten Rauhigkeitsinformation und einem dafür vorzugebenden ersten Rauhigkeitsgrenzwert eine erste Rauhigkeit-Vergleichsinformation,
   - aus der zweiten Rauhigkeitsinformation und einem dafür vorzugebenden zweiten Rauhigkeitsgrenzwert eine zweite Rauhigkeit-Vergleichsinformation,
   - aus der Standardabweichungsinformation und einem dafür vorzugebenden Standardabweichungsgrenzwert eine Standardabweichung-Vergleichsinformation,
   - aus der ersten Kreuzkorrellationsinformation und einem dafür vorzugebenden ersten Kreuzkorrellationsgrenzwert eine erste Kreuzkorrellation-Vergleichsinformation,
   - aus der zweiten Kreuzkorrellationsinformation und einem dafür vorzugebenden zweiten Kreuzkorrellationsgrenzwert eine zweite Kreuzkorrellation-Vergleichsinformation,
   - aus der ersten Flächenfehlstelleninformation und einem dafür vorzugebenden ersten Flächenfehlstellengrenzwert eine erste Flächenfehlstellen-Vergleichsinformation,
   - aus der zweiten Flächenfehlstelleninformation und einem dafür vorzugebenden zweiten Flächenfehlstellengrenzwert eine zweite Flächenfehlstellen-Vergleichsinformation,
   - aus der dritten Flächenfehlstelleninformation und einem dafür vorzugebenden dritten Flächenfehlstellengrenzwert eine dritte Flächenfehlstellen-Vergleichsinformation sowie
   - aus der vierten Flächenfehlstelleninformation und einem dafür vorzugebenden vierten Flächenfehlstellengrenzwert eine vierte Flächenfehlstellen-Vergleichsinformation gebildet und
- die Kalibrierfaktorinformation,
- die Abmessungsinformation,
- die Umriß-Vergleichsinformation,
- die Standardabweichung-Vergleichsinformation,
- die erste Rauhigkeit-Vergleichsinformation,
- die zweite Rauhigkeit-Vergleichsinformation,
- die erste Kreuzkorrellation-Vergleichsinformation,
- die zweite Kreuzkorrellation-Vergleichsinformation,
- die erste Flächenfehlstellen-Vergleichsinformation,
- die zweite Flächenfehlstellen-Vergleichsinformation,
- die dritte Flächenfehlstellen-Vergleichsinformation und
- die vierte Flächenfehlstellen-Vergleichsinformation zu
   - einer Qualitätsinformation und/oder zu
   - einer Qualitätsfaktorinformation verarbeitet.

Nach einer zweiten bevorzugten Weiterbildung der Erfindung, die auch bei der ersten bevorzugten Weiterbildung angewendet werden kann, weist
- der Staukörper zusätzlich zur ersten und zur zweiten eine dritte und eine vierte Abreißkante auf,
- wird aus der Abstandsinformation
   - eine dritte Rauhigkeitsinformation bezüglich des nicht exakt geraden Verlaufs der dritten Abreißkante,
   - eine vierte Rauhigkeitsinformation bezüglich des nicht exakt geraden Verlaufs der vierten Abreißkante,
- gebildet und
- werden im neuronalen Netzwerk auch die dritte und die vierte Rauhigkeitsinformation mit diesen Informationen entsprechenden Standardinformationen, die aus einer Vielzahl von Naßkalibrierungen gewonnen worden sind, zur Kalibrierfaktorinformation und/oder zur Abmessungsinformation verarbeitet.

Ein Vorteil der Erfindung besteht darin, daß die Genauigkeit der Kalibrierung sehr gut ist und in der gewünschten Größenordnung von 0,75% vom Meßwert liegt.

Die Erfindung und weitere Vorteile werden nun anhand von Ausführungsbeispielen näher erläutert, die in den Figuren der Zeichnung dargestellt sind, die nicht maßstäblich sind.
- Fig. 1: zeigt schematisch, teilweise aufgeschnitten und perspektivisch in einer Sicht von unten nach oben den Aufbau eines Wirbelaufnehmers,
- Fig. 2: zeigt schematisch, teilweise aufgeschnitten und perspektivisch in einer Sicht von oben nach unten den Wirbelaufnehmer von Fig. 1,
- Fig. 3: zeigt im Längsschnitt die stark schematisierte Anordnung einer hochauflösenden elektronischen Kamera vor dem Einlaufende des Wirbelaufnehmers nach den Fig. 1 und 2,
- Fig. 4: zeigt in Form eines Blockschaltbilds ein bevorzugtes Ausführungsbeispiel einer Trockenkalibrier-Elektronik zusammen mit einer bevorzugten Weiterbildung für eine Anordnung von Kamera und Wirbelaufnehmer nach Fig. 3,
- Fig. 5: zeigt schematisch das Modell eines Neurons eines neuronalen Netzwerks, und
- Fig. 6: zeigt schematisch ein einfaches neuronales Netzwerk aus acht Neuronen entsprechend Fig. 5.

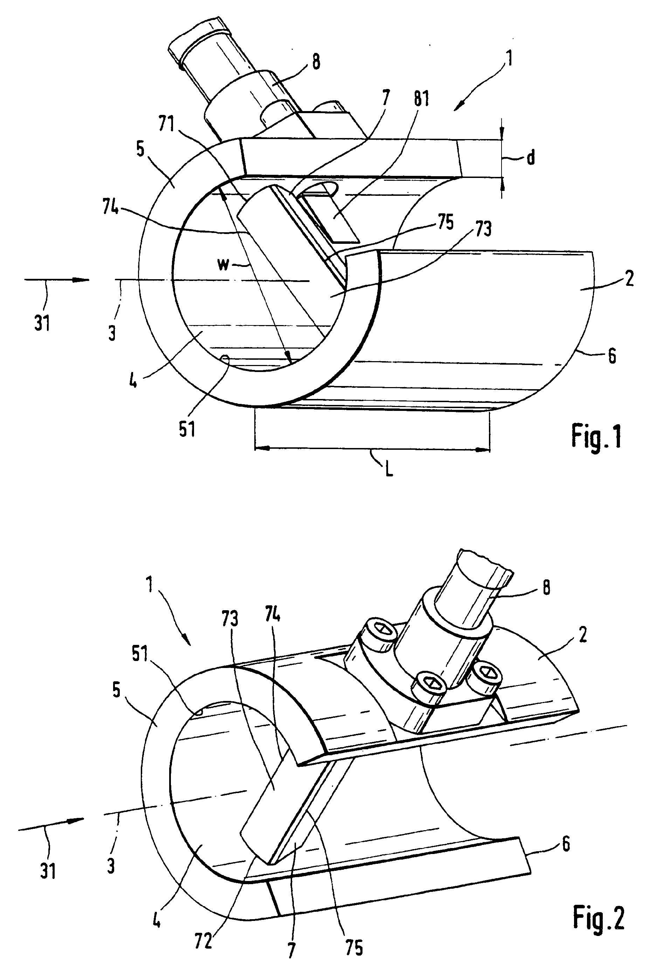

In den Fig. 1 und 2 ist der Aufbau eines Wirbelaufnehmers 1 dargestellt, wie er üblich ist. Damit alle für die Erfindung wichtigen Einzelheiten sichtbar gemacht werden können, sind in den Fig. 1 und 2 perspektivische Darstellungen gewählt, und zwar in Fig. 1 eine Sicht von unten nach oben bzw. in Fig. 2 eine Sicht von oben nach unten.

Der Wirbelaufnehmer 1 umfaßt ein Meßrohr 2 mit vom Hersteller vorgegebener Länge L; darin strömt bei Betrieb ein zu messendes Fluid. Dieses Fluid kann eine Flüssigkeit, ein Gas oder ein Dampf sein. Das Meßrohr 2 besteht üblicherweise aus einem geeigneten Metall, z.B. Edelstahl oder Gußeisen, aber auch ein geeigneter Hart-Kunststoff kann als Material des Meßrohrs 2 dienen.

Das Meßrohr 2 hat eine Achse 3, eine Innenfläche 4, ein Einlaufende 5 und ein Auslaufende 6. Somit ist die Strömungsrichtung des Fluids festgelegt; in den Fig. 1 und 2 ist dies die Richtung von links nach rechts, wie durch den Pfeil 31 veranschaulicht ist.

Das Meßrohr 2 hat ferner eine lichte Weite w und eine dazu passende Stärke d seiner Wand. Diese beiden Werte sind von der Nennweite und dem zulässigen Druck des Fluids der produzierten Wirbelaufnehmer abhängig.

Wenn das Meßrohr 2 einen kreisförmigen Querschnitt hat, wie in den Fig. 1 und 2 vorausgesetzt ist, ist die lichte Weite w der Durchmesser des Lumens des Meßrohrs 2. Mit dem Lumen bildet das Einlaufende eine Umrißlinie 51; diese ist ein üblicherweise Kreis, da das Einlaufende 5 eben ist und in einer Ebene senkrecht zur Achse 3 liegt.

Ein Staukörper 7 hat die räumliche Form eines geraden Prismas mit einer Prismaachse und einer Querschnittsfläche, die eine vom Hersteller zu wählende geometrischen Form aufweist und senkrecht zur Prismaachse ist. In den Fig. 1 und 2 ist diese geometrische Form im wesentlichen ein gleichschenkliges Dreieck. Anstatt eines geraden Prismas sind auch schon gerade Voll- oder Teilzylinder als Staukörper im Stand der Technik beschrieben worden.

Der Staukörper 7 hat ferner ein entlang einer ersten Fixierungszone 71 mit der Innenfläche 4 der Wand des Meßrohrs 2 mechanisch fest verbundenes erstes Ende und ein entlang einer zweiten Fixierungszone 72 mit der Innenfläche 4 der Wand des Meßrohrs 2 mechanisch fest verbundenes zweites Ende. Diese mechanisch feste Verbindung wird gewöhnlich durch Schweißen hergestellt, da das Meßrohr 2 meistens aus Stahl besteht.

Der Staukörper 7 hat auch eine Anströmfläche 73 mit einer ersten und einer zweiten Abreißkante 74, 75 und ist üblicherweise entlang eines Durchmessers des Meßrohrs 2 angeordnet. Der Staukörper kann auch noch eine dritte und eine vierte Abreißkante aufweisen.

Schließlich sitzt ein Sensorelement im Staukörper oder ist stromabwärts des Staukörpers von innen an der Wand des Meßrohrs, von außen an der Wand, innerhalb der Wand oder durch die Wand hindurch angeordnet. Das Sensorelement kann z.B. kapazitiv, induktiv oder piezoelektrisch wirken, aber auch ein Ultraschallsensor sein. In den Fig. 1 und 2 ist diejenige Variante dargestellt, bei der ein Sensorelement 8 von außen nach innen durch die Wand geführt ist, das in einem in das Fluid ragenden Paddel 81 endet.

Die mit den Wirbeln verbundenen Druckschwankungen bewegen das Paddel 81 senkrecht zu der in Fig. 1 zu sehenden Fläche hin und her. Wie bereits kurz erwähnt wurde, werden die vom Sensorelement 8 erzeugten elektrischen Signale von der Auswerte-Elektronik verarbeitet und in üblicher Weise angezeigt und/oder weitergeleitet. Die Auswerte-Elektronik ist nicht Gegenstand der Erfindung, so daß auf deren Erläuterung verzichtet wird, zumal im Stand der Technik zahlreiche Auswerte-Elektroniken beschrieben sind.

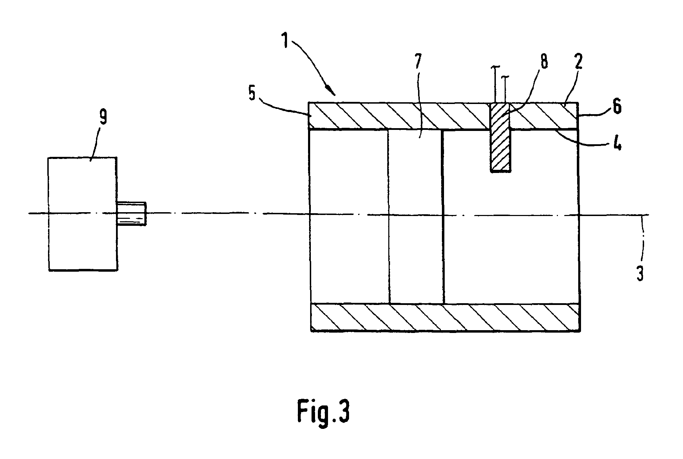

Fig. 3 zeigt schematisch im Längsschnitt die Anordnung einer hochauflösenden elektronischen Kamera 9, wie z.B. eine Charge-Coupled-Device-Kamera oder ein Laser-Scanner, vor dem Einlaßende des Wirbelaufnehmers nach den Fig. 1 und 2. In Fig. 3 ist die Kamera 9 räumlich so angeordnet, daß ihre optische Achse mit der Achse 3 des Wirbelaufnehmers zusammenfällt.

Dies ist jedoch nicht zwingend. Die Kamera 9 kann nämlich auch so vor dem Einlaufende 5 positioniert werden, daß die optische Achse und die Achse 3 einen Winkel in einer Ebene bilden, die beide Achsen enthält und die senkrecht zur Prismaachse des Staukörpers 7 ist.

In diesen verschwenkten Positionen der Kamera 9 ist es z.B. möglich, Wirbelaufnehmer trockenzukalibrieren, die einen Staukörper aufweisen, der zusätzlich zur ersten und zur zweiten eine dritte und eine vierte Abreißkante hat. Wie in diesem Fall die Trockenkalibrier-Elektronik weiterzubilden ist, ist weiter unten erläutert.

Die in den verschwenkten Positionen der Kamera 9 erzeugten zweidimensionalen Bilder können ferner bekannten Tomographie-Algorithmen unterworfen werden, wie sie z.B. in dem Buch von F. Mayinger, "Optical Measurements", Berlin 1994, ISBN 3-540-56765-8 bzw. 0-387-56765-8, Kapitel 17, Seiten 371 bis 424 beschrieben sind.

Mit diesen Algorithmen lassen sich Schichtbilder von Ebenen, die senkrecht zur Prismaachse des Staukörpers 7 sind, erzeugen, aus denen dreidimensionale Bilder aufgebaut werden können. Aus diesen werden dann entsprechend der Erfindung wieder Kalibrier- und/oder Qualitätsinformationen generiert.

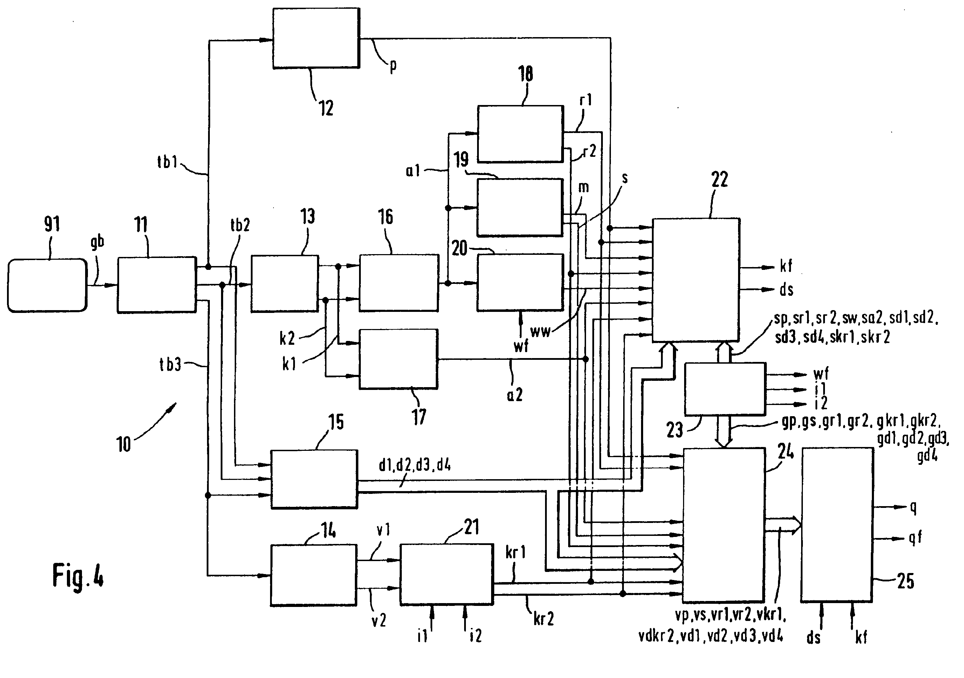

Die Fig. 4 zeigt in Form eines Blockschaltbilds eine bevorzugte Trockenkalibrier-Elektronik 10 zusammen mit einer bevorzugten Weiterbildung entsprechend einer Anordnung von Kamera 9 und Wirbelaufnehmer 1, wie sie in Fig. 3 gezeigt ist. Die Kamera 9 ist in Strömungsrichtung ausgerichtet, und deren Kamera-Elektronik 91 erzeugt in der Form eines Gesamtbild-Signals gb ein digitalisiertes, zweidimensionales Gesamtbild von folgenden Teilbereichen des Wirbelaufnehmers 1: Vom Staukörper 7, von der im Bereich des Staukörpers 7 vorhandenen Innenfläche 4 des Meßrohrs 2, von den beiden Fixierungszonen 71, 72 und von der Umrißlinie 51 des Einlaufendes 5.

Die Trockenkalibrier-Elektronik 10 teilt als erstes das Gesamtbild in ein erstes, ein zweites und ein drittes Teilbild auf, indem sie in einer Segmentierstufe 11 das Gesamtbild-Signal gb in die folgenden Signale aufspaltet: ein erstes Teilbild-Signal tb1, das praktisch nur Information über das Einlaufende 5 und die Innenfläche 4 des Meßrohrs 2 enthält, ein zweites Teilbild-Signal tb2, das praktisch nur Information über den Staukörper 7 ohne die Fixierungszonen 71, 72 enthält, und ein drittes Teilbild-Signal tb3, das praktisch nur Information über die Fixierungszonen 71, 72 enthält.

Die Trockenkalibrier-Elektronik 10 extrahiert aus dem ersten Teilbild eine Umrißinformation über die Umrißlinie 51 des Einlaufendes 5, indem aus dem Teilbild-Signal tb1 in einer Umrißselektiertstufe 12 ein Umriß-Signal p erzeugt wird. Dieses Signal enthält auch eine Information über die lichte Weite w des Meßrohrs 2. Falls erforderlich, kann aus dem Umriß-Signal p ein Signal über die lichte Weite w erzeugt werden.

Die Trockenkalibrier-Elektronik 10 extrahiert aus dem zweiten Teilbild eine erste Kanteninformation über die erste Abreißkante 74 des Staukörpers 7 und eine zweite Kanteninformation über dessen zweite Abreißkante 75. Dies erfolgt so, daß aus dem Teilbild-Signal tb2 in einer Abreißkantenselektierstufe 13 ein erstes Abreißkanten-Signal k1 und ein zweites Abreißkanten-Signal k2 erzeugt werden.

Die Trockenkalibrier-Elektronik 10 extrahiert aus dem dritten Teilbild eine erste Verlaufsinformation über die erste Fixierungszone 71 des Staukörpers 7 und eine zweite Verlaufsinformation über dessen zweite Fixierungszone 72. Dies erfolgt so, daß aus dem Teilbild-Signal tb3 in einer Verlaufselektiertstufe 14 ein erstes Verlauf-Signal v1 und ein zweites Verlauf-Signal v2 erzeugt werden.

Die Trockenkalibrier-Elektronik 10 extrahiert aus dem ersten Teilbild eine die Innenfläche 4 des Meßrohrs 2 betreffende, erste Flächenfehlstellen-Information, aus dem zweiten Teilbild eine die Anströmfläche 73 des Staukörpers 7 betreffende, zweite Flächenfehlstellen-Information sowie aus dem dritten Teilbild eine die Fläche der ersten Fixierungszone 71 betreffende dritte, Flächenfehlstellen-Information und eine die Fläche der zweiten Fixierungszone 72 betreffende, vierte Flächenfehlstellen-Information. Dies erfolgt so, daß aus den Teilbild-Signalen tb1, tb2, tb3 in einer Fehlstellendetektierstufe 15 ein erstes, zweites, drittes und viertes Fehlstellen-Signal d1, d2, d3, d4 erzeugt werden.

Die Trockenkalibrier-Elektronik 10 bildet aus der ersten und der zweiten Kanteninformation eine Abstandsinformation und eine Winkelinformation bezüglich der Abweichung von der Parallelität der Kanten des Staukörpers, indem in einer Abstanddetektierstufe 16 aus dem ersten und dem zweiten Abreißkanten-Signal k1, k2 ein Abstand-Signal a1 und in einer Winkeldetektiertstufe 17 ein Winkel-Signal a2 erzeugt werden.

Die Trockenkalibrier-Elektronik 10 bildet aus der Abstandsinformation die folgenden weiteren Einzelinformationen: eine erste Rauhigkeitsinformation bezüglich des nicht exakt geraden Verlaufs der ersten Abreißkante, eine zweite Rauhigkeitsinformation bezüglich des nicht exakt geraden Verlaufs der zweiten Abreißkante, eine Mittelwertinformation aller gegenseitigen Abstände der Abreißkanten entlang des Staukörpers, eine Standardabweichung-Information aller dieser Abstände und eine Wichtungsinformation, der eine Wichtungsfunktion zugrunde gelegt wird, die für im Betrieb auftretende Strömungsprofile des Fluids charakteristisch ist. Es kann z.B. ein turbulentes Strömungsprofil zugrundegelegt werden.

Dies erfolgt so, daß in einer Rauhigkeitsdetektierstufe 18 aus dem Abstand-Signal a1 ein erstes und ein zweites Rauhigkeit-Signal r1, r2 erzeugt werden, daß in einem Mittelwertbildner 19 ein Mittelwert-Signal m sowie ein Standardabweichung-Signal s und daß in einer Wichtungsstufe 20 ein Wichtung-Signal ww erzeugt werden.

Der Wichtungsstufe 20 wird ein Wichtungsfunktion-Signal wf zugeführt, das für die im Betrieb auftretenden oder zu erwartenden Strömungsprofile des Fluids charakteristisch ist. Das Wichtungsfunktion-Signal wf wird aus einem Ensemble von einzelnen Wichtungsfunktion-Signalen durch ein Steuersignal ausgewählt. Das Ensemble ist in einem ersten Bereich eines zur Trockenkalibrier-Elektronik 10 gehörenden Speichers 23 abgelegt und umfaßt alle Wichtungsfunktion-Signale wf, die zu Strömungsprofilen gehören, die im Betrieb des Wirbelaufnehmers 1 auftreten oder zu erwarten sind.

Die Trockenkalibrier-Elektronik 10 bildet aus der ersten Verlaufsinformation und aus einer den idealen Verlauf der ersten Fixierungszone 71 des Staukörpers 7 charakterizierenden ersten Idealinformation eine erste Kreuzkorrelationsinformation und aus der zweiten Verlaufsinformation und aus einer den idealen Verlauf der zweiten Fixierungszone 72 des Staukörpers 7 charakterizierenden zweiten Idealinformation eine zweite Kreuzkorrelationsinformation.

Dies erfolgt so, daß in einer Kreuzkorrelationsstufe 21 aus dem ersten Verlauf-Signal v1 und aus einem den idealen Verlauf der ersten Fixierungszone 71 des Staukörpers 7 charakterizierenden ersten Ideal-Signal i1 ein erstes Kreuzkorrelation-Signals kr1 sowie aus dem zweiten Verlauf-Signal v2 und aus einem den idealen Verlauf der zweiten Fixierungszone 72 des Staukörpers 7 charakterizierenden zweiten Ideal-Signal i2 ein zweites Kreuzkorrelation-Signal kr2 erzeugt werden.

Der Kreuzkorrelationstufe 21 sind die Ideal-Signale i1, i2 zugeführt, die z.B. in einem zweiten Bereich des Speichers 23 abgelegt sind. Die Ideal-Signale i1, i2 können aus dem bekannten Idealverlauf der Fixierzonen 71, 72 berechnet und dann im zweiten Speicherbereich abgelegt werden.

Die Trockenkalibrier-Elektronik 10 verarbeitet in einem neuronalen Netzwerk 22 die Umrißinformation, die erste und die zweite Rauhigkeitsinformation, die Mittelwertinformation, die Winkelinformation, die Wichtungsinformation, die erste, die zweite, die dritte und die vierte Flächenfehlstelleninformation sowie die erste und die zweite Kreuzkorrelationsinformation mit jeweils diesen einzelnen Informationen entsprechenden Standardinformationen, die aus einer Vielzahl von Naßkalibrierungen gewonnen worden sind, zu einer Kalibrierfaktorinformation und/oder zu einer Abmessungsinformation über die geometrischen Abmessungen des einzelnen, kalibrierten Wirbelaufnehmers.

Bevor nun erläutert wird, auf welche Weise dies in der Schaltung von Fig. 4 geschieht, wird zunächst auf die prinzipielle Wirkungsweise von neuronalen Netzwerken eingegangen.

Ein neuronales Netzwerk, das in der Fachwelt auch als künstliches neuronales Netz (auf englisch: artificial neuronal network, abgekürzt ANN) bezeichnet wird, ist im Gegensatz zu einem üblichen Prozessor, der aufgrund eines in seiner Programmierung festgeschriebenen Algorithmus digitale Daten verarbeitet, eine Datenverarbeitungseinheit, die Daten nicht anhand eines fest vorgegebenen Algorithmus, sondern aufgrund eines erst während der Datenverarbeitung sich selbst generierenden Algorithmus verarbeiten kann. Damit ist umschrieben, daß der Algorithmus durch Interaktion zwischen bekannten Daten, den sogenannten Trainingsdaten und Testdaten, sowie einer Lernregel in einer Trainingsphase sich selbst erstellt.

Neuronale Netzwerke eignen sich daher für die Verarbeitung von Daten, wenn kein fester Algorithmus erstellbar ist, z.B. weil keine statistische Methode oder kein Modell zur Verfügung steht. Neuronale Netzwerke eignen sich daher insb. wenn viele Daten über ein erwünschtes Verhalten eines Systems vorliegen, die zu verarbeitenden Daten verrauscht sind oder eine Strukturierung und/oder Kompression und/oder Merkmalsextraktion der Daten erforderlich ist.

Ein neuronales Netzwerk ist ein Multiprozessor-System, das einfache Prozessorelemente, die sogenannten Neuronen, und ein Verbindungsnetzwerk aufweist, durch das die Neuronen untereinander mittels einer Vielzahl von Signalverbindungen verknüpft sind. Die skalare Eingangsverküpfung eines Neurons mit allen anderen Neuronen wird als Propagierungsfunktion bezeichnet. Die adaptive Interaktion zwischen den Neuronen aufgrund einer Lernregel wird als Trainingphase bezeichnet.

Einfach aufgebaute Neuronen sammeln Daten einer Vielzahl von benachbarten Neuronen, mit denen sie über gewichtete Verbindungen gekoppelt sind, und verknüpfen diese Daten nach einfachen Regeln. Somit wird, obwohl das einzelne Neuron wenig komplex ist, durch die Zusammenschaltung vieler Neuronen die Leistung des neuronalen Netzwerks als Gesamtheit beträchtlich erhöht.

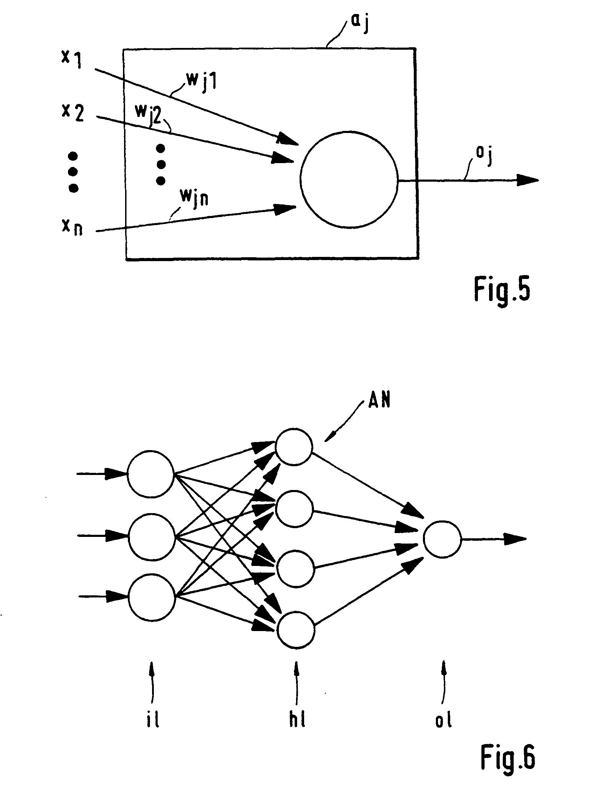

In Fig. 5 ist schematisch das Modell eines Neurons aⱼ dargestellt. Das Neuron aⱼ hat mehrere Eingänge x₁, x₂, ... xₙ und einen einzigen Ausgang oⱼ für Ausgangswerte. An den Eingängen liegen Eingangsdaten, die z.B. von gemessenen Werten einer physikalischen Größe stammen und die als Eingangsmuster oder als Eingangsvektor bezeichnet werden.

Das Verhalten des Neurons aⱼ ist durch zwei Verarbeitungsschritte bestimmt. Zunächst wird entsprechend von Gewichtsfaktoren wⱼ₁, wⱼ₂, ... wⱼₙ, die in Fig. 5 durch Pfeile angedeutet sind, die gewichtete Summe aller Eingangssdaten gebildet. Anschließend wird daraus und aus einem vorhergehenden (früheren) Aktivierungszustand mittels einer Aktivierungsfunktion ein momentaner (neuer) Aktivierungszustand und ein entsprechender Ausgangswert am Ausgang oⱼ generiert.

Die Aktivierungsfunktion ist üblicherweise eine einen Exponential-Term enthaltende Funktion, wie z.B. eine sigmoide Funktion der Form f(z) = 1/(1 + e^{-z}); z ist dabei die erwähnte gewichtete Summe. Der Aktivierungszustand kann auf einen Wertebereich zwischen 0 und 1 oder zwischen -1 und +1 begrenzt sein. Es kann auch ein Schwellwert in der Weise vorgesehen werden, daß Ausgangssignale lediglich dann an den Ausgang gelangen, wenn sie größer oder gleich dem Schwellwert sind. Als Aktivierungsfunktion kann auch eine Gauss'sche Glockenfunktion für z verwendet werden.

In Fig. 6 ist der Aufbau eines einfachen neuronalen Netzwerks AN schematisch dargestellt, das aus acht Neuronen besteht, die durch die dargestellten Kreise symbolisiert sind. Jedes Neuron trägt zu einem bestimmten Teil zum Eingangs/Ausgangs-Verhalten des neuronalen Netzwerks bei. Dieses hat einen Input-Layer il, einen Hidden-Layer hl und einen Output-Layer ol.

Der Hidden-Layer hl kann aus mehreren Lagen bestehen und hat keine direkten Verbindungen von bzw. nach außerhalb des neuronalen Netzwerks. Es sind auch neuronale Netzwerke üblich, die keinen Hidden-Layer enthalten. Input-Layer und Hidden-Layer bestehen jeweils aus mehreren Neuronen, während der Output-Layer mindestens ein Neuron enthält. Die Anzahl der Neuronen des Output-Layers ist gleich der Anzahl der zu generierenden Arten von Ausgangswerten des neuronalen Netzwerks.

Jede dieser Ausgangswert-Arten setzt sich aus m Klassen benachbarter Ausgangswerte zusammen; benachbart bedeutet hier, daß die zu einer Klasse gehörenden Ausgangswerte nur eine vorgegebene maximale Differenz untereinander haben.

In Fig. 6 bestehen Signalverbindungen lediglich vom Input-Layer zum Hidden-Layer und von diesem zum Output-Layer, d.h. es gibt in Fig. 6 keine Rückkopplungs-Signalverbindungen und keine Signalverbindungen zwischen Neuronen desselben Layers. Es sind jedoch, prinzipiell auch Rückkopplungs-Signalverbindungen und/oder Signalverbindungen zwischen Neuronen desselben Layers möglich.

Zunächst wird in der Trainingsphase auf der Basis der Trainingsdaten, die dem Input-Layer zugeführt werden, und auf der Basis der erwähnten m Klassen der Algorithmus erstellt, d.h. die Trainingsdaten werden auf die m Klassen eindeutig abgebildet und somit klassifiziert.

Dies erfogt dadurch, daß die Gewichtungsfaktoren wⱼ₁, wⱼ₂, ... wⱼₙ der einzelnen Neuronen und gegebenenfalls die zugehörigen Schwellwerte entsprechend der Lernregel iterativ so eingestellt und damit so optimiert werden, daß ein Fehler zwischen der jeweiligen vorgegebenen Klasse und derjenigen Klasse, in die das neuronale Netzwerk die Trainingsdaten momentan einordnet, minimal wird.

Bei der Erfindung sind die Trainingsdaten und die Testdaten Datensätze, die von mindestens einer gemeinsamen Eigenschaft, insb. von mehreren Eigenschaften einer festen Anzahl n von Wirbelaufnehmern mittels der elektronischen Kamera 9 und der Trockenkalibrier-Elektronik 10 bereits bestimmt worden sind. Diese gemeinsame Eigenschaft bzw. gemeinsamen Eigenschaften ist bzw. sind z.B. eine bzw. mehrere der bereits erwähnten Bestimmungsgrößen, die die räumliche Form der Wirbelaufnehmer ausmachen. Entsprechende Signale sind im folgenden als Standard-Signale bezeichnet.

Bei den n Wirbelaufnehmern ist mindestens eine den jeweils erzeugten Volumendurchfluß-Meßwert beeinflussende Größe, z.B. der Kalibrierfaktor, bekannt und liegt innerhalb eines gewählten Wertebereichs, also z.B. innerhalb eines Kalibrierfaktorbereichs. Diese Größe muß zuvor, z.B. mittels Naß-Kalibrierung, mit hoher Genauigkeit gemessen werden. Diese Messung liefert n innerhalb des Wertebereichs liegende Einzelwerte dieser Größe, also z.B. des Kalibrierfaktors.

Als Trainingsdaten werden höchstens n-1 Datensätze und als Testdaten der bzw. die nicht als Trainingsdaten benutzten Datensätze verwendet. Die Trainingsdaten werden dem Eingangs-Layer des neuronalen Netzwerks zugeführt und dadurch wie erwähnt klassifiziert. Entsprechend der Lernregel werden mit den Trainingsdaten mehrere Iterationsläufe des neuronalen Netzwerks durchgeführt.

Nach der Trainingsphase wird in der Testphase mit den Testdaten, die dem Input-Layer zugeführt werden, überprüft, ob der erlernte Algorithmus die den Volumendurchfluß-Meßwert beeinflussende Größe, z.B. den Kalibrierfaktor, ausreichend genau erzeugt.

Soviel zu den prinzipiellen Eigenschaften neuronaler Netzwerke.

In der Arbeitsphase werden entsprechend Fig. 4 dem Input-Layer des neuronalen Netzwerks 22 folgende Signale zugeführt: das Umriß-Signal p, die Rauhigkeit-Signale r1, r2, das Mittelwert-Signal m, das Wichtung-Signal ww, das Winkel-Signal a2, die Flächenfehlstellen-Signale d1, d2, d3, d4 und die Kreuzkorrelation-Signal kr1, kr2.

Zuvor wurden diesen einzelnen Signalen entsprechende Standard-Signale als Trainings- und Testdaten zugeführt. Das sind: ein Standard-Umriß-Signal sp, ein erstes und ein zweites Standard-Rauhigkeit-Signal sr1, sr2, ein Standard-Wichtung-Signal sw, ein Standard-Winkel-Signal sa2, ein erstes, ein zweites, ein drittes und ein viertes Standard-Flächenfehlstellen-Signal sd1, sd2, sd3, sd4 sowie ein erstes und ein zweites Standard-Kreuzkorrelation-Signal skr1, skr2. Für jede zu fertigende Nennweite der Wirbelaufnehmer und für jede vorgesehene Form des Staukörpers müssen entsprechende Standard-Signale an den oben erwähnten n Wirbelaufnehmern ermittelt werden. Die Standard-Signale sp, sr1, sr2, sw, sa2, sd1, sd2, sd3, sd4, skr1, skr2 sind in einem dritten Bereich des Speichers 23 abgelegt.

Am Ausgang des neuronalen Netzwerks 22 entsteht ein Kalibrierfaktor-Signal kf und ein Abmessung-Signal ds der geometrischen Abmessungen des einzelnen, kalibrierten Wirbelaufnehmers. Diese Signale können in geeigneter Weise weiterverwendet werden. Hierzu werden sie z.B. in einem nichtflüchtigen, jedoch programmierbaren Speicher abgelegt. Das Kalibrierfaktor-Signal kf dient dazu, die Auswerte-Elektronik jedes einzelnen Wirbelaufnehmers so einzustellen oder zu programmieren, daß alle gefertigten Wirbelaufnehmer identische Anzeige-Signale für identische Volumen-Durchflußwerte abgeben.

In Fig. 4 ist auch eine bevorzugte Weiterbildung dargestellt. Die Trockenkalibrier-Elektronik 10 ist mit dieser bevorzugten Weiterbildung so erweitert, daß aus der Abstandsinformation eine Standardabweichungsinformation aller Abstände zwischen den Abreißkanten des Staukörpers gebildet wird und daß mittels eines Mehrfach-Komparators 24 aus der Umrißinformation und einem dafür vorzugebenden Umrißgrenzwert eine Umriß-Vergleichsinformation, aus der ersten Rauhigkeitsinformation und einem dafür vorzugebenden ersten Rauhigkeitsgrenzwert eine erste Rauhigkeit-Vergleichsinformation, aus der zweiten Rauhigkeitsinformation und einem dafür vorzugebenden zweiten Rauhigkeitsgrenzwert eine zweite Rauhigkeit-Vergleichsinformation, aus der Standardabweichungsinformation und einem dafür vorzugebenden Standardabweichungsgrenzwert eine Standardabweichung-Vergleichsinformation, aus der ersten Kreuzkorrelationsinformation und einem dafür vorzugebenden ersten Kreuzkorrelationsgrenzwert eine erste Kreuzkorrelation-Vergleichsinformation, aus der zweiten Kreuzkorrelationsinformation und einem dafür vorzugebenden zweiten Kreuzkorrelationsgrenzwert eine zweite Kreuzkorrelation-Vergleichsinformation, aus der ersten Flächenfehlstelleninformation und einem dafür vorzugebenden ersten Flächenfehlstellengrenzwert eine erste Flächenfehlstellen-Vergleichsinformation, aus der zweiten Flächenfehlstelleninformation und einem dafür vorzugebenden zweiten Flächenfehlstellengrenzwert eine zweite Flächenfehlstellen-Vergleichsinformation, aus der dritten Flächenfehlstelleninformation und einem dafür vorzugebenden dritten Flächenfehlstellengrenzwert eine dritte Flächenfehlstellen-Vergleichsinformation sowie aus der vierten Flächenfehlstelleninformation und einem dafür vorzugebenden vierten Flächenfehlstellengrenzwert eine vierte Flächenfehlstellen-Vergleichsinformation gebildet werden. Ferner werden die Kalibrierfaktorinformation, die Abmessungsinformation, die erste Rauhigkeit-Vergleichsinformation, die zweite Rauhigkeit-Vergleichsinformation, die Umriß-Vergleichsinformation, die Standarsabweichungsinformation, die erste Kreuzkorrelation-Vergleichsinformation, die zweite Kreuzkorrelation-Vergleichsinformation, die erste Flächenfehlstellen-Vergleichsinformation, die zweite Flächenfehlstellen-Vergleichsinformation, die dritte Flächenfehlstellen-Vergleichsinformation und die vierte Flächenfehlstellen-Vergleichsinformation zu einer Qualitätsfaktorinformation und/oder einer Qualitätsinformation verarbeitet.

Dies erfolgt so, daß der Mittelwertbildner 19 aus dem Abstand-Signal a1 ein Standardabweichung-Signal s aller Abstände zwischen den Abreißkanten des Staukörpers 7 erzeugt.

Ferner sind dem Mehrfach-Komparator 24 zugeführt: das Umriß-Signal p und ein dafür vorzugebendes Umrißgrenzwert-Signal gp, das erste Rauhigkeit-Signal r1 und ein dafür vorzugebendes erstes Rauhigkeitsgrenzwert-Signal gr1, das zweite Rauhigkeit-Signal r2 und ein dafür vorzugebendes zweites Rauhigkeitsgrenzwert-Signal gr2, das Standardabweichung-Signal s und ein dafür vorzugebendes Standardabweichungsgrenzwert-Signal gs, das erste Kreuzkorrelation-Signal kr1 und ein dafür vorzugebendes erstes Kreuzkorrelationsgrenzwert-Signal gkr1, das zweite Kreuzkorrelation-Signal kr2 und ein dafür vorzugebendes zweites Kreuzkorrelationsgrenzwert-Signal gkr2, das erste Flächenfehlstellen-Signal d1 und ein dafür vorzugebendes erstes Flächenfehlstellengrenzwert-Signal gd1, das zweite Flächenfehlstellen-Signal d2 und ein dafür vorzugebendes zweites Flächenfehlstellengrenzwert-Signal gd2, das dritte Flächenfehlstellen-Signal d3 und ein dafür vorzugebendes drittes Flächenfehlstellengrenzwert-Signal gd3, das vierte Flächenfehlstellen-Signal d4 und ein dafür vorzugebendes viertes Flächenfehlstellengrenzwert-Signal gd4.

Der Mehrfach-Komparator 24 erzeugt aus den Signalpaaren g, gp; s, gs; r1, gr1; r2, gr2; kr1, gkr1; kr2, gkr2; d1, gd1; d2, gd2; d3, gd3; d4, gd4 ein zu jedem Signalpaar gehörendes Vergleichssignal; dies sind: ein Umriß-Vergleichssignal vp, ein Standardabweichung-vergleichssignal vs, ein erstes Rauhigkeit-Vergleichssignal vr1, ein zweites Rauhigkeit-Vergleichssignal vr2, ein erstes Kreuzkorrelation-Vergleichssignal vkr1, ein zweites Kreuzkorrelation-Vergleichssignal vkr2, ein erstes Flächenfehlstellen-Vergleichssignal vd1, ein zweites Flächenfehlstellen-Vergleichssignal vd2, ein drittes Flächenfehlstellen-Vergleichssignal vd3 und ein viertes Flächenfehlstellen-Vergleichssignal vd4.

Schließlich werden die folgenden Signale einem Mikroprozessor 25 zugeführt: das Kalibrierfaktor-Signal kf, das Abmessung-Signal ds, das Umriß-Vergleichssignal vp, das Standardabweichung-Vergleichssignal vs, das erste Rauhigkeit-Vergleichssignal vr1, das zweite Rauhigkeit-Vergleichssignal vr2, das erste Kreuzkorrelation-Vergleichssignal vkr1, das zweite Kreuzkorrelation-Vergleichssignal vkr2, das erste Flächenfehlstellen-vergleichssignal vd1, das zweite Flächenfehlstellen-vergleichssignal vd2, das dritte Flächenfehlstellen-Vergleichssignal vd3 und das vierte Flächenfehlstellen-Vergleichssignal vd4.

Der Mikroprozessor 25 verarbeitet diese ihm zugeführten Signale zu einem Qualitätsfaktor-Signal qf und/oder einem Qualitäts-Signal q. Diese Signale werden in geeigneter Weise bei der Messung und Prüfung jedes einzelnen gefertigten Wirbelaufnehmers weiterverwendet. Die Signale q, qf dienen dazu, außerhalb der genannten Grenzwerte liegende Exemplare auszuscheiden, da sie unbrauchbar sind.

## Patentansprüche

1. Verfahren zum Trockenkalibrieren von Wirbel-Durchflußaufnehmern (1) (im folgenden kurz als Wirbelaufnehmer bezeichnet), von denen jeder aufweist:
- ein Meßrohr (2) mit einer vorgegebenen Länge und einem Lumen,
-- in dem im Betrieb ein bezüglich seines Volumendurchflusses zu messendes Fluid strömt und
-- das eine Achse (3),
-- eine Innenfläche (4),
-- ein Einlaufende (5), das mit dem Lumen eine Umrißlinie (51) bildet,
-- ein Auslaufende (6),
-- eine zu einer Nennweite gehörende lichte Weite (w) und
-- eine zu einem zulässigen Druck des Fluids passende Stärke (d) seiner Wand hat,
- einen Staukörper (7),
- - der eine Querschnittsfläche mit einer vom Hersteller wählbaren geometrischen Form hat,
- - der ein entlang einer ersten Fixierungszone (71) mit der Wand des Meßrohrs verbundenes erstes Ende und
- - ein entlang einer zweiten Fixierungszone (72) mit der Wand des Meßrohrs verbundenes zweites Ende aufweist,
- - der eine Anströmfläche (73) mit einer ersten und einer zweiten Abreißkante (74, 75) hat und
- - der entlang eines Durchmessers des Meßrohrs angeordnet ist, und
- ein Sensorelement (8),
- - das im Staukörper sitzt oder
- - das stromabwärts des Staukörpers von innen an der Wand oder von außen an der Wand oder innerhalb der Wand des Meßrohrs angeordnet ist,
bei welchem Verfahren
- mittels einer auf der Achse (3) vor dem Meßrohr (2) angeordneten hochauflösenden elektronischen Kamera (9) in Strömungsrichtung ein digitalisiertes, zweidimensionales Gesamtbild vom Staukörper (7), von der im Bereich des Staukörpers vorhandenen Innenfläche (4) des Meßrohrs, von den beiden Fixierungszonen (71, 72) und von der Umrißlinie (51) des Einlaufendes (5) erzeugt wird,
- das Gesamtbild in ein erstes, ein zweites und ein drittes Teilbild aufgeteilt wird,
- - welches erste Teilbild praktisch nur Information über das Einlaufende (5) und die Innenfläche (4) enthält,
- - welches zweite Teilbild praktisch nur Information über den Staukörper (7) ohne die Fixierungszonen (71, 72) enthält und
- - welches dritte Teilbild praktisch nur Information über die Fixierungszonen (71, 72) enthält,
- aus dem ersten Teilbild
- - eine Umrißinformation über die Umrißlinie (51) und
- - eine erste Flächenfehlstelleninformation - bezüglich der Innenfläche (4) des Meßrohrs - extrahiert wird,
- aus dem zweiten Teilbild
- - eine erste Kanteninformation über die erste Abreißkante (74) des Staukörpers,
- - eine zweite Kanteninformation über dessen zweite Abreißkante (75) und
- - eine zweite Flächenfehlstelleninformation - bezüglich der Anströmfläche (73) des Staukörpers - extrahiert wird,
- aus dem dritten Teilbild
- - eine erste Verlaufsinformation über die erste Fixierungszone (71) des Staukörpers,
- - eine zweite Verlaufsinformation über dessen zweite Fixierungszone (72),
- - eine dritte Flächenfehlstelleninformation - bezüglich der Fläche der ersten Fixierungszone (71) - und
- - eine vierte Flächenfehlstelleninformation - bezüglich der Fläche der zweiten Fixierungszone (72) - extrahiert werden,
- aus der ersten und der zweiten Kanteninformation
- - eine Abstandsinformation und
- - eine Winkelinformation bezüglich der Abweichung von der Parallelität der Abreißkanten (74, 75) des Staukörpers gebildet wird,
- aus der Abstandsinformation
- - eine erste Rauhigkeitsinformation bezüglich des nicht exakt geraden Verlaufs der ersten Abreißkante,
- - eine zweite Rauhigkeitsinformation bezüglich des nicht exakt geraden Verlaufs der zweiten Abreißkante,
- - eine Mittelwertinformation aller gegenseitigen Abstände der Abreißkanten entlang des Staukörpers,
- - eine Wichtungsinformation mittels einer für den Betrieb vorgegebene Strömungsprofile des Fluids charakterisierenden Wichtungsfunktion gebildet werden,
- aus der ersten Verlaufsinformation und aus einer den idealen Verlauf der ersten Fixierungszone (71) charakterizierenden ersten Idealinformation eine erste Kreuzkorrelationsinformation und
- aus der zweiten Verlaufsinformation und aus einer den idealen Verlauf der zweiten Fixierungszone (72) charakterizierenden zweiten Idealinformation eine zweite Kreuzkorrelationsinformation gebildet werden und
- in einem neuronalen Netzwerk (22)
- - die Umrißinformation,
- - die erste und die zweite Rauhigkeitsinformation,
- - die Mittelwertinformation,
- - die Wichtungsinformation,
- - die Winkelinformation,
- - die erste, die zweite, die dritte und die vierte Flächenfehlstelleninformation sowie
- die erste und die zweite Kreuzkorrelationsinformation
- mit jeweils diesen einzelnen Informationen entsprechenden Standardinformationen, die aus einer Vielzahl von Naßkalibrierungen gewonnen worden sind, zu
- - einer Kalibrierfaktorinformation und/oder zu
- - einer Abmessungsinformation über die geometrischen Abmessungen des kalibrierten Wirbelaufnehmers verarbeitet werden.

2. Verfahren nach Anspruch 1, bei dem
- aus der Abstandsinformation eine Standardabweichungsinformation bezüglich aller Abstände zwischen den Abreißkanten (74, 75) des Staukörpers gebildet wird,
- mittels eines Mehrfach-Komparators (24)
-- aus der Umrißinformation und einem dafür vorzugebenden Umrißgrenzwert eine umriß-Vergleichsinformation,
-- aus der ersten Rauhigkeitsinformation und einem dafür vorzugebenden ersten Rauhigkeitsgrenzwert eine erste Rauhigkeit-Vergleichsinformation,
-- aus der zweiten Rauhigkeitsinformation und einem dafür vorzugebenden zweiten Rauhigkeitsgrenzwert eine zweite Rauhigkeit-Vergleichsinformation,
-- aus der Standardabweichungsinformation und einem dafür vorzugebenden Standardabweichungsgrenzwert eine Standardabweichung-Vergleichsinformation,
-- aus der ersten Kreuzkorrelationsinformation und einem dafür vorzugebenden ersten Kreuzkorrelationsgrenzwert eine erste Kreuzkorrelation-Vergleichsinformation,
-- aus der zweiten Kreuzkorrelationsinformation und einem dafür vorzugebenden zweiten Kreuzkorrelationsgrenzwert eine zweite Kreuzkorrelation-Vergleichsinformation,
-- aus der ersten Flächenfehlstelleninformation und einem dafür vorzugebenden ersten Flächenfehlstellengrenzwert eine erste Flächenfehlstellen-Vergleichsinformation,
-- aus der zweiten Flächenfehlstelleninformation und einem dafür vorzugebenden zweiten Flächenfehlstellengrenzwert eine zweite Flächenfehlstellen-Vergleichsinformation,
-- aus der dritten Flächenfehlstelleninformation und einem dafür vorzugebenden dritten Flächenfehlstellengrenzwert eine dritte Flächenfehlstellen-Vergleichsinformation sowie
-- aus der vierten Flächenfehlstelleninformation und einem dafür vorzugebenden vierten Flächenfehlstellengrenzwert eine vierte Flächenfehlstellen-Vergleichsinformation gebildet werden und
- die Kalibrierfaktorinformation,
- die Abmessungsinformation,
- die Umriß-Vergleichsinformation,
- die Standardabweichung-Vergleichsinformation,
- die erste Rauhigkeit-Vergleichsinformation,
- die zweite Rauhigkeit-Vergleichsinformation,
- die erste Kreuzkorrelation-Vergleichsinformation,
- die zweite Kreuzkorrelation-Vergleichsinformation,
- die erste Flächenfehlstellen-Vergleichsinformation,
- die zweite Flächenfehlstellen-Vergleichsinformation,
- die dritte Flächenfehlstellen-Vergleichsinformation und
- die vierte Flächenfehlstellen-Vergleichsinformation zu
- - einer Qualitätsinformation und/oder zu
- - einer Qualitätsfaktorinformation verarbeitet werden.

3. Verfahren nach Anspruch 1 oder 2, bei dem
- der Staukörper (7) zusätzlich zur ersten und zur zweiten eine dritte und eine vierte Abreißkante aufweist,
- aus der Abstandsinformation
-- eine dritte Rauhigkeitsinformation bezüglich des nicht exakt geraden Verlaufs der dritten Abreißkante,
-- eine vierte Rauhigkeitsinformation bezüglich des nicht exakt geraden Verlaufs der vierten Abreißkante,
- gebildet wird und
- im neuronalen Netzwerk (22) auch die dritte und die vierte Rauhigkeitsinformation mit diesen Informationen entsprechenden Standardinformationen, die aus einer Vielzahl von Naßkalibrierungen gewonnen worden sind, zur Kalibrierfaktorinformation und/oder zur Abmessungsinformation verarbeitet werden.

## Claims

1. A method for dry-calibrating vortex flow sensors (1) (hereinafter abbreviated to "vortex sensors"), each of which has:
- a measuring tube (2) with a specified length and with a lumen,
- in which tube, in operation, flows a fluid, the volumetric flow rate of which is to be measured, and
- which tube has an axis (3),
- an internal surface (4),
- an inlet end (5), which forms a contour line (51) with the lumen,
- an outlet end (6),
- an inside width (w) corresponding to a nominal diameter, and
- a wall thickness (d) suitable for an admissible pressure of the fluid,
- a target body (7),
- which has a cross-sectional area with a geometric shape that can be selected by the manufacturer,
- which body has a first end connected to the wall of the measuring tube along a first fixing zone (71) and
- a second end connected to the wall of the measuring tube along a second fixing zone (72),
- which body has a fluid feed surface (73) with a first shedding edge and with a second shedding edge (74, 75), and
- which body is arranged along a diameter of the measuring tube, and
- a sensor element (8),
- which is seated in the target body or
- which, downstream of the target body, is arranged from inside on the wall or from outside on the wall or inside the wall of the measuring tube,
in which method:
- there is generated, by means of a high-resolution electronic camera (9) arranged on the axis (3) upstream of the measuring tube (2) in the direction of flow, a digitised, two-dimensional overview image of the target body (7), of the internal surface (4) of the measuring tube in the region of the target body, of the two fixing zones (71, 72) and of the contour line (51) of the inlet end (5),
- the overview image is divided into a first subimage, a second subimage and a third subimage,
- which first subimage contains practically only information concerning the inlet end (5) and the internal surface (4),
- which second subimage contains practically only information concerning the target body (7) without the fixing zones (71, 72), and
- which third subimage contains practically only information concerning the fixing zones (71, 72),
- from the first subimage
- there is extracted contour information concerning the contour line (51) and
- there is extracted first surface defects information - relating to the internal surface (4) of the measuring tube,
- from the second subimage
- there is extracted first edge information concerning the first shedding edge (74) of the target body,
- there is extracted second edge information concerning the second shedding edge (75) thereof, and
- there is extracted second surface defects information - relating to the flow feed surface (73) of the target body,
- from the third subimage
- there are extracted first profile information concerning the first fixing zone (71) of the target body,
- second profile information concerning the second fixing zone (72) thereof,
- third surface defects information - relating to the surface of the first fixing zone (71), and
- fourth surface defects information - relating to the surface of the second fixing zone (72),
- from the first and the second edge information
- there is formed distance information and
- there is formed angle information relating to the deviation from parallelism of the shedding edges (74, 75) of the target body,
- from the distance information
- there are formed first surface roughness information relating to the not exactly straight profile of the first shedding edge,
- second surface roughness information relating to the not exactly straight profile of the second shedding edge,
- mean value information for all the distances between each of the shedding edges along the target body,
- weighting information, by means of a weighting function characterising fluid flow profiles that are specified for operation,
- from the first profile information and from first ideal information characterising the ideal profile of the first fixing zone (71) there is formed first cross-correlation information, and
- from the second profile information and from second ideal information characterising the ideal profile of the second fixing zone (72) there is formed second cross-correlation information, and
- in a neural network (22)
- the contour information,
- the first and the second surface roughness information,
- the mean value information,
- the weighting information,
- the angle information,
- the first, the second, the third and the fourth surface defects information and
- the first and the second cross-correlation information,
- together with standard information which corresponds to each type of information referred to above and which has been obtained from a plurality of wet calibrations,
are processed to form
- calibration factor information and/or to form
- dimension information concerning the geometric dimensions of the calibrated vortex sensor.

2. A method as claimed in claim 1, wherein:
- there is formed, from the distance information, standard deviation information relating to all the distances between the shedding edges (74, 75) of the target body,
- by means of a multiple comparator (24)
- from the contour information and from a contour limit value to be specified therefor, there is formed contour comparison information,
- from the first surface roughness information and from a first surface roughness limit value to be specified therefor, there is formed first surface roughness comparison information,
- from the second surface roughness information and from a second surface roughness limit value to be specified therefor, there is formed second surface roughness comparison information,
- from the standard deviation information and from a standard deviation limit value to be specified therefor, there is formed standard deviation comparison information,
- from the first cross-correlation information and from a first cross-correlation limit value to be specified therefor, there is formed first cross-correlation comparison information,
- from the second cross-correlation information and from a second cross-correlation limit value to be specified therefor, there is formed second cross-correlation comparison information,
- from the first surface defects information and from a first surface defects limit value to be specified therefor, there is formed first surface defects comparison information,
- from the second surface defects information and from a second surface defects limit value to be specified therefor, there is formed second surface defects comparison information,
- from the third surface defects information and from a third surface defects limit value to be specified therefor, there is formed third surface defects comparison information, and
- from the fourth surface defects information and from a fourth surface defects limit value to be specified therefor, there is formed fourth surface defects comparison information, and
- the calibration factor information,
- the dimension information,
- the contour comparison information,
- the standard deviation comparison information,
- the first surface roughness comparison information,
- the second surface roughness comparison information,
- the first cross-correlation comparison information,
- the second cross-correlation comparison information,
- the first surface defects comparison information,
- the second surface defects comparison information,
- the third surface defects comparison information and
- the fourth surface defects comparison information
are processed to form
- quality information and/or to form
- quality factor information.

3. A method as claimed in claim 1 or 2, wherein:
- the target body (7) has a third and a fourth shedding edge in addition to the first and the second shedding edges,
- from the distance information
- there is formed
- third surface roughness information relating to the not exactly straight profile of the third shedding edge,
- fourth surface roughness information relating to the not exactly straight profile of the fourth shedding edge, and
- in the neural network (22) the third surface roughness information and the fourth surface roughness information are also processed, together with standard information which corresponds to this surface roughness information and which has been obtained from a plurality of wet calibrations, to form calibration factor information and/or dimension information.

## Revendications

1. Procédé destiné à l'étalonnage à sec de débitmètres vortex (1), dont chacun d'entre eux présente
- un tube de mesure (2) d'une longueur prédéfinie et avec un canal intérieur
-- dans lequel circule, pendant le fonctionnement, un fluide, dont le débit volumique est à mesurer et
-- qui présente un axe (3),
-- une surface intérieure (4),
-- une extrémité d'entrée (5), qui forme une ligne de contour (51) avec le canal intérieur,
-- une extrémité de sortie (6),
-- un diamètre intérieur (w) correspondant à un diamètre nominal et
-- une épaisseur de paroi (d) adaptée à une pression admissible du fluide,
- un corps de retenue (7),
- - qui présente une aire de section d'une forme géométrique sélectionnable par le fabricant
- - qui présente le long d'une première zone de fixation (71) une première extrémité reliée avec la paroi du tube de mesure, et
- - qui présente le long d'une deuxième zone de fixation (72) une deuxième extrémité reliée avec la paroi du tube de mesure
- - qui présente une surface d'écoulement (73) dotée d'une première et d'une deuxième arête de rupture (74, 75) et
- - qui est disposé le long d'un diamètre du tube de mesure, et
- un élément de capteur (8),
- - qui est logé dans le corps de retenue ou
- - qui est disposé en aval du corps de retenue, depuis l'intérieur contre la paroi ou depuis l'extérieur contre la paroi, ou à l'intérieur de la paroi du tube de mesure,
méthode pour laquelle
- est générée une image globale numérisée, bidimensionnelle, du corps de retenue (7), de la surface intérieure (4) du tube de mesure présente dans la zone du corps de retenue, des deux zones de fixation (71, 72) et de la ligne de contour (51) de l'extrémité d'entrée (5), au moyen d'un appareil photo électronique (9) haute résolution, disposé dans le sens d'écoulement sur l'axe (3) devant le tube de mesure (2),
- l'image globale est scindée en une première, une deuxième et une troisième image partielle,
- - la première image partielle ne contenant pratiquement que des informations sur l'extrémité d'entrée (5) et la surface intérieure (4),
- - la deuxième image partielle ne contenant pratiquement que des informations sur le corps de retenue (7) sans les zones de fixation (71, 72), et
- - la troisième image partielle ne contenant pratiquement que des informations sur les zones de fixation (71, 72,
- première image partielle, à partir de laquelle est extraite
- - une information sur la ligne de contour (51) et
- - une première information de défaut de surface - concernant la surface intérieure (4) du tube de mesure,
- deuxième image partielle, à partir de laquelle est extraite
- - une première information sur la première arête de rupture (74) du corps de retenue,
- - une deuxième information sur sa deuxième arête de rupture (75) et
- - une deuxième information de défaut de surface - concernant la surface d'écoulement (73) du corps de retenue,
- troisième image partielle, à partir de laquelle est extraite
- - une première information de profil sur la première zone de fixation (71) du corps de retenue,
- - une deuxième information de profil sur la deuxième zone de fixation (72) du corps de retenue,
- - une troisième information de défaut de surface - concernant la surface de la première zone de fixation (71) - et
- - une quatrième information de défaut de surface - concernant la surface de la deuxième zone de fixation (72),
- première et deuxième information d'arête, à partir desquelles est formée
- - une information de distance et
- - une information d'angle concernant l'écart du parallélisme des arêtes de rupture (74, 75) du corps de retenue,
- information de distance, à partir de laquelle est formée
- - une première information de rugosité concernant le profil pas exactement rectiligne de la première arête de rupture,
- - une deuxième information de rugosité concernant le profil pas exactement rectiligne de la deuxième arête de rupture,
- - une information de la valeur moyenne de l'ensemble des distances réciproques des arêtes de rupture le long du corps de retenue,
- - une information de pondération au moyen d'une fonction de pondération caractérisant le fonctionnement de profils d'écoulement prédéfinis du fluide,
- première information de profil et première information idéale caractérisant le profil idéal de la première zone de fixation (71), à partir desquelles est formée une première information de corrélation croisée et
- deuxième information de profil et deuxième information idéale caractérisant le profil idéal de la deuxième zone de fixation (72), à partir desquelles est formée une deuxième information de corrélation croisée et
- sont transformées, dans un réseau neuronal (22),
- - l'information de contour,
- - la première et la deuxième information de rugosité,
- - l'information de valeur moyenne,
- - l'information de pondération,
- - l'information d'angle,
- - la première, la deuxième, la troisième et la quatrième information de défaut de surface, ainsi que
- - la première et la deuxième information de corrélation croisée
- avec les informations standard correspondant respectivement aux différentes informations individuelles, qui ont été acquises à partir d'un grand nombre d'étalonnages dynamiques,
- - en une information de facteur d'étalonnage et/ou
- - en une information de mesure concernant les mesures géométriques du débitmètre vortex étalonné.

2. Procédé selon la revendication 1, pour lequel
- à partir de l'information de distance, une information d'écart-type concernant l'ensemble des distances entre les arêtes de rupture (74, 75) du corps de retenue,
- au moyen d'un comparateur multiple (24)
-- à partir de l'information de contour et d'une valeur limite de contour à prédéfinir, une information de comparaison de contour,
-- à partir de la première information de rugosité et d'une première valeur limite de rugosité à prédéfinir, une première information de comparaison de rugosité
-- à partir de la deuxième information de rugosité et d'une deuxième valeur limite de rugosité à prédéfinir, une deuxième information de comparaison de rugosité
-- à partir de l'information d'écart-type et d'une valeur limite d'écart-type à prédéfinir, une information de comparaison d'écart-type,
-- à partir d'une première information de corrélation croisée et d'une première valeur limite de corrélation croisée à prédéfinir, une première information de comparaison de corrélation croisée,
-- à partir d'une deuxième information de corrélation croisée et d'une deuxième valeur limite de corrélation croisée à prédéfinir, une deuxième information de comparaison de corrélation croisée,
-- à partir d'une première information de défaut de surface et d'une première valeur limite de défaut de surface à prédéfinir, une première information de comparaison de défaut de surface,
-- à partir d'une deuxième information de défaut de surface et d'une deuxième valeur limite de défaut de surface à prédéfinir, une deuxième information de comparaison de défaut de surface,
-- à partir d'une troisième information de défaut de surface et d'une troisième valeur limite de défaut de surface à prédéfinir, une troisième information de comparaison de défaut de surface,
-- à partir d'une quatrième information de défaut de surface et d'une quatrième valeur limite de défaut de surface à prédéfinir, une quatrième information de comparaison de défaut de surface et
- l'information du facteur d'étalonnage,
- l'information de mesure,
- l'information de comparaison de contour,
- l'information de comparaison d'écart-type,
- la première information de comparaison de rugosité,
- la deuxième information de comparaison de rugosité,
- la première information de comparaison de corrélation croisée,
- la deuxième information de comparaison de corrélation croisée,
- la première information de comparaison de défaut de surface,
- la deuxième information de comparaison de défaut de surface,
- la troisième information de comparaison de défaut de surface,
- la quatrième information de comparaison de défaut de surface,
- - sont transformées en une information de qualité et/ou
- - en une information de facteur de qualité.

3. Procédé selon la revendication 1 ou 2, pour lequel
- le corps de retenue (7) présente, en plus de la première et de la deuxième arrête de rupture, une troisième et une quatrième arête de rupture,
- sont formées, à partir de l'information de distance,
-- une troisième information de rugosité concernant le profil pas exactement rectiligne de la troisième arête de rupture
-- une quatrième information de rugosité concernant le profil pas exactement rectiligne de la quatrième arête de rupture et
- sont transformées, dans le réseau neuronal (22), également la troisième et la quatrième information de rugosité avec les informations standard correspondant à ces informations, qui ont été acquises à partir d'un grand nombre d'étalonnages dynamiques, en une information de facteur d'étalonnage et/ou en une information de mesure.
